# EUROPÄISCHE PATENTSCHRIFT

(11) **EP 3 610 179 B1**
(45) Veröffentlichungstag und Bekanntmachung des Hinweises auf die Patenterteilung: **03.01.2024**
(21) Anmeldenummer: 18717042.8
(22) Anmeldetag: 11.04.2018
(51) Int. Cl.: F16J 15/00, B67D 7/64, F04F 1/06

(54) **VORRICHTUNG ZUM ABDICHTEN UND EVAKUIEREN EINES BEHÄLTERS MIT PASTÖSER FLÜSSIGKEIT**
DEVICE FOR SEALING AND EVACUATING A CONTAINER CONTAINING A PASTE-LIKE LIQUID
DISPOSITIF DESTINÉ À ÉTANCHÉIFIER ET À FAIRE LE VIDE DANS UN RÉCIPIENT CONTENANT UN LIQUIDE PÂTEUX

(30) Priorität: 11.04.2017 DE 102017107825
(43) Veröffentlichungstag der Anmeldung: 19.02.2020
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Onsagers AS
(86) Internationale Anmeldenummer: PCT/EP2018/059231
(87) Internationale Veröffentlichungsnummer: WO 2018/189217

(56) Entgegenhaltungen:
- WO-A1-03/086596
- DE-A1- 10 201 774
- DE-A1-102013 005 965
- DE-U1-202004 009 185
- US-A- 3 667 197
- US-A- 3 927 576
- US-A- 3 976 229
- US-A- 5 137 368
- US-A- 5 257 723

## Beschreibung

Die vorliegende Erfindung verbessert eine Fassfolgeplatte-Vorrichtung zum Abdichten und Evakuieren eines Behälters, der eine zylindrische Innenkontur aufweist und eine insbesondere pastöse Flüssigkeit enthält.

Es ist eine bekannte verfahrenstechnische Aufgabe zum Beispiel in der Mehrkomponenten-Kunststoffherstellung und -verarbeitung, pastöse (hochviskose) Materialien, die in zylindrischen Fässern, üblicherweise aus Blech oder Kunststoff, abgefüllt sind, bei der Weiterverarbeitung mit Pumpen (in der Regel Spezialpumpen für hochviskose Flüssigkeiten) aus den Fässern zu fördern. Da die Materialien nicht immer selbstnivellierend sind, das heißt, so viskos sind, dass sie nicht bloß aufgrund Ihres Eigengewichts eine ebene, horizontale Flüssigkeitsoberfläche ausbilden, werden sogenannte "Fassfolgeplatten" eingesetzt: Folgeplatten sind Deckelvorrichtungen oder Abdichtungsvorrichtungen nach Art eines Zylinderkolbens, die (nach Abnahme des eigentlichen Fassdeckels) senkrecht von oben in das Fass eingesetzt werden und die mit Dichtringen versehen sind, welche die Fassfolgeplatte zur Fasswand vollumfänglich abdichten. So bilden sie eine hermetisch dichte, starre Abdeckung über der Flüssigkeit und umschließen zusammen mit dem Fassbehälter die Flüssigkeit vollständig und dicht. Die Fassfolgeplatten werden nach dem Einsetzen in das Fass, linear geführt, auf das Material abgesenkt, und zwar zum Beispiel hydraulisch oder pneumatisch oder elektrisch angetrieben oder aufgrund des Eigengewichts der Folgeplatte. Ziel dieses Absenkens ist es, die Unterseite der Folgeplatte möglichst frei von Zwischenräumen und Lufteinschlüssen mit der Flüssigkeit in Kontakt zu bringen, um durch eine Förderöffnung in der Folgeplatte und mittels einer Förderpumpe (die üblicherweise direkt auf der Folgeplatte montiert ist) die Flüssigkeit aus dem Behälter zu fördern.

Die für diese Flüssigkeiten verwendeten Behälter sind üblicherweise Fässer, deren Innenraum eine zylindrische, insbesondere kreiszylindrische Innenkontur aufweisen (möglicherweise mit aussteifenden Umfangs- oder Längssicken), wobei die Innenkontur üblicherweise ohne Verjüngung in eine Außenöffnung des Innenraums, nämlich in die Fassöffnung nach außen mündet.

Jedenfalls ist es für das Pumpen hochviskoser Flüssigkeiten insbesondere wegen der Beschaffenheit der dazu verwendeten Pumpen wesentlich, dass sich in der Flüssigkeit, also insbesondere auch im Fass und unter der Fassfolgeplatte möglichst keine oder zumindest nur möglichst wenige und möglichst kleine Lufteinschlüsse befinden.

Daraus ergibt sich das Problem beim Einsetzen der Fassfolgeplatte - und im industriellen Prozessablauf folglich regelmäßig beim Fasswechsel, wenn nämlich ein Fass leer ist und also gegen ein volles Fass ausgetauscht werden muss, so gut, wie irgend möglich, sicher zu stellen, dass keine Luft in die Förder- und Dosierpumpe gelangt. Da die Fässer meist nicht randvoll abgefüllt sind, ergibt sich eine gewisse Luftmenge von der Materialoberfläche bis zur Einsetzebene der Fassfolgeplatte (Deckelöffnung des Fasses). Diese Luft entweicht im Stand der Technik durch Entlüftungseinrichtungen zum Beispiel in Form von Bohrungen mit manuellem Verschluss, etwa ähnlich einer Gewindestange, oder durch manuelle, pneumatische oder elektrische Kugelhähne. Diese Entlüftungseinrichtungen werden geöffnet, wenn die Fassfolgeplatte in das Fass eingefahren wird. Der entstehende Luftdruck kann über die Entlüftungseinrichtung entweichen. Hierbei schon zu Beginn besteht Spritzgefahr von Material durch die Entlüftungseinrichtung nach au-ßen, da zum Beispiel von dem letzten Fasswechsel noch Material in der Entlüftungseinrichtung enthalten sein kann. Es kann zudem zu einem unkontrolliert schnellen Absacken der Fassfolgeplatte kommen, wenn die Luft schlagartig entweicht. Da die Entlüftungseinrichtung so lange offen bleiben muss, bis absolut keine Luft mehr enthalten ist, lässt es sich für den Anwender bekanntlich oftmals nicht vermeiden, von oben in das Fass zur soweit abgesenkten Fassfolgeplatte zu greifen, um zum Beispiel Becher zu wechseln, in denen das Material aus der Entlüftungseinrichtung aufgefangen wird. Somit kann bei ruckartigem Absenken der Fassfolgeplatte oder auch durch die Spritzgefahr auf den Anwender schwere Verletzung die Folge sein.

Prozesstechnisch ist Luft im System ein höchst nachteiliges Ereignis, weil die Förderpumpen ab einer gewissen Menge und Größe der Lufteinschlüsse diese nicht gegen das in dem System befindliche Material verdichten können und/oder weil die eingebrachte Luft zu Mischungsverhältnisproblemen oder sogar zum Prozessabbruch führt. Somit nehmen Anwender oftmals in Kauf, eine große Menge von Material aus der Entlüftungseinrichtung zu entnehmen (und also zu verlieren), um so gut wie möglich sicher zu stellen, dass keine Luft im System verbleibt.

Die DE 10 2013 005 965 zeigt ein kranzförmiges, vollumfängliches, offenporig poröses Element auf der Innenseite einer Fassfolgeplatte. Durch das hindurch Luft aus dem Behälter abgesaugt wird, um so die dort hindurchgehende Entlüftungsleitung gegen solch austretendes Material gegen Ende des Entlüftens zu versperren. Dies hat den Nachteil, dass die Poren sich zusetzen und so das Entlüften immer stärker behindern.

Der vorliegenden Erfindung liegt die Aufgabe zu Grunde, eine Vorrichtung zum Abdichten sowie Absaugen von Luft aus einem Behälter, insbesondere oberhalb einer pastösen Flüssigkeit darin sowie unterhalb einer Fassfolgeplatte, zu schaffen, die prozess- und anwenderfreundlicher, und kostensparend ist und insbesondere die zuvor genannten Nachteile überwindet.

Diese Aufgabe wird von einer Vorrichtung mit den Merkmalen des Anspruchs 1 gelöst. Bevorzugte Ausgestaltungen sind in den Unteransprüchen angegeben.

Die erfindungsgemäße Fassfolgeplatte-Vorrichtung dient dem Abdichten sowie dem Absaugen von Luft aus einem Behälter, der eine zylindrische Innenkontur aufweist und eine insbesondere pastöse Flüssigkeit enthält, zum Beispiel in den hier eingangs beschriebenen verfahrenstechnischen Prozessen. Die Erfindung verhindert dabei Lufteintrag in das System, Spritzgefahr, Materialverlust sowie Gefahr für die Anwender beim Einsetzen der Vorrichtung und insbesondere beim Behälterwechsel.

Die erfindungsgemäße Fassfolgeplatte-Vorrichtung weist eine Dichtung auf, die auf einem Umfang der Vorrichtung angeordnet und angepasst ist, in die zylindrische Innenkontur eines Behälters (insbesondere eines der bereits beschriebenen Behälter) umfänglich dichtend einsetzbar zu sein. Vorzugsweise mündet die Innenkontur des Behälters, an die die erfindungsgemäße Vorrichtung angepasst ist, ohne Verjüngung in eine Öffnung nach außerhalb des Behälters. Die Innenkontur ist vorzugsweise kreiszylindrisch; sie ist besonders bevorzugt die kreiszylindrische Innenkontur eines glattwandigen Stahlblech-Deckelfasses mit Spannring-Verschluss (zum Beispiel: deren Durchmesser in einer verbreiteten Ausgestaltung 572 mm beträgt) oder eines Gebindes aus Kunststoff. Die Innenkontur, an die die Erfindung angepasst ist, kann Sicken (oder andere Strukturen zum Beispiel zur Fassversteifung) aufweisen, und zwar insbesondere in Richtung der Zylinderachse. Dazu ist die Dichtung vorzugsweise angepasst, indem sie sich zum Beispiel in die Form dieser Struktur elastisch einschmiegt.

Die Dichtung der erfindungsgemäßen Fassfolgeplatte-Vorrichtung grenzt eine Außenseite der Vorrichtung von einer Innenseite der Vorrichtung ab.

Eine Durchleitung führt von der Innenseite zur Außenseite der Fassfolgeplatte-Vorrichtung. An der Außenseite ist die Durchleitung zum Anschließen einer weiter zu einer Vakuumpumpe oder Evakuierungspumpe führenden Leitungsverbindung eingerichtet.

Die Durchleitung führt durch ein offenporig poröses Bauteil hindurch, Das poröse Material lässt mittels der Vakuumpumpe abzusaugendes Gas (insbesondere Luft) hindurch, während es für die insbesondere pastöse Flüssigkeit im Behälter eine Art Labyrinthdichtung darstellt. Das poröse Bauteil besteht vorzugsweise aus Aluminiumgranulat-Epoxyharz-Verbundwerkstoff wie zum Beispiel Metapor^{®}. Es eignen sich aber überhaupt auch alle Materialien und Strukturen (und sind mit offenporig porös gemeint), die Luft durchlassen und nur minimal oder sehr wenig Flüssigkeit (so dass insbesondere viskose Flüssigkeit möglichst wenig in die Poren eindringen und sich dort festsetzen kann). Zum Beispiel auch Flies wie Goretex^{®} ist denkbar, wobei solche nicht eigenstabilen Materialien und Strukturen eine formhaltende Stützstruktur erfordern können.

Das poröse Bauteil ist auswechselbar, und zwar von der Außenseite der Fassfolgeplatte-Vorrichtung aus, um es nämlich schnell und einfach ersetzen zu können, falls doch Flüssigkeit in Poren eindringen und sich dort festsetzen konnte, so dass die Durchgängigkeit des porösen Bauteils verschlechtert ist. Das poröse Bauteil ist besonders bevorzugt nur so groß, dass es einen Querschnitt der Durchleitung vollständig ausfüllt oder abdeckt und in der Durchleitung sicher positioniert und auswechselbar ist.

An der Außenseite der Vorrichtung kann eine Anschlussvorrichtung angeordnet sein, die auf das (direkte) Anschließen einer Vakuumpumpe eingerichtet ist. Oder an die Anschlussvorrichtung lässt sich (indirekt) eine Leitung anschließen, die dann mit einer Vakuumpumpe in Leitungsverbindung steht. "Vakuumpumpe" oder "Evakuierungspumpe" steht für eine Gasförderpumpe oder - anlage, die eingerichtet ist, Unterdrück zu erzeugen (und möglicherweise insbesondere zum Demontieren eines entleerten Fasses in den oben beschriebenen Prozessen, wenn nämlich die Fassfolgeplatte herausgefahren wird, auch Überdruck).

In die Anschlussvorrichtung kann mindestens der zur Außenseite führende Endabschnitt der Durchleitung integriert sein, die von der Innenseite zur Außenseite der Fassfolgeplatte-Vorrichtung führt. In die Anschlussvorrichtung kann zudem das offenporig poröse Bauteil auswechselbar integriert sein, durch das die Durchleitung hindurchführt.

Mittels der Erfindung kann beim Aufsetzen der Fassfolgeplatte, direkt durch die Fassfolgeplatte hindurch, die Luft im Behälter über der Flüssigkeitsoberfläche (aber auch im Flüssigkeitsmaterial, dort insbesondere in Form von Einschlüssen oder Blasen nahe unter der Materialoberfläche) abgesaugt werden.

Die Vakuumentlüftung durch das offenporig poröse Bauteil hindurch verhindert den bisherigen (immer mit Materialverlust verbundenen) Materialaustrag, der bei der herkömmlichen Entlüftung als Kontrollphänomen nötig war. Denn nun wird die Luft wird mittels Vakuumpumpe abgesaugt, aber das poröse Material dringt (wegen geringer Porengröße von vorzugsweise unter 1mm, aber auch wegen der "labyrinthischen" Beschaffenheit des offenporig porösen Materials) nicht oder allenfalls nur geringfügig in das pastöse Material ein. Auch muss nun während des Fasswechsels kein Mensch an der Vorrichtung aktiv werden, so dass die damit verbundenen Gefährdungen ausgeschlossen werden können:
Die Fassfolgeplatte kann mittels der Erfindung nämlich, unter Vakuum, gesteuert und langsam abgesenkt werden (zum Beispiel mittels einer Verfahrvorrichtung, die hier nicht weiter beschrieben ist, zum Verfahren der Folgeplatte), um schließlich auf die Flüssigkeitsoberfläche aufzusetzen. Dies erfolgt nun erfindungsgemäß, ohne dass beim Aufsetzen der Folgeplatte durch die Anschlussvorrichtung der Vakuumleitung Material auf die Außenseite gelangt, und zwar wegen der Labyrinthdichtungsfunktion des porösen Bauteils. Dass dann der Raum über der Flüssigkeit vollständig evakuiert ist und die Folgeplatte vollständig auf der Flüssigkeit aufliegt, ist erfindungsgemäß steuerungs- oder regelungstechnisch gut darstellbar, weil dann, wenn die Luft abgesaugt ist und nun Flüssigkeit von der Innenseite des Behälters gegen das poröse Bauteil gesaugt wird, der Saugdruck schlagartig ansteigt.

Besonders bevorzugt ist es auch unter diesem Aspekt, die Durchleitung an der höchsten Stelle der Innenseite der Folgeplatte (in deren bestimmungsgemäßer Orientierung eingesetzt in ein senkrecht stehendes Fass) anzuordnen. An einer Folgeplatte-Vorrichtung können auch mehrere solcher Durchleitungen (zum Beispiel in mehreren Anschlussvorrichtungen) integriert sein (die dann vorzugsweise alle zu einer Vakuumpumpe führen. So können auch Störungen (etwa in einer Mischmaschine in einem folgenden Dosier- und Entnahmeprozess) durch Luft zwischen Flüssigkeitsoberfläche und Fassfolgeplatte vermieden werden: Nun kann nämlich (durch pneumatische oder hydraulische Zylinder oder mittels elektrischer Einheiten) durch Aufpressen der Folgeplatte auf das Material die Flüssigkeitsförderpumpe (die sich zum Beispiel auf der Folgeplatte befindet) befüllt werden: Material wird in die Förderpumpe gepresst - und dies erfolgt ohne Lufteinschlüsse, weil schon vor und dann während des Absenkens der Raum über der Flüssigkeit (durch den hindurch die Folgeplatte abgesenkt wird) evakuiert wird und folglich keine Luft mit in die Förderpumpe gepresst wird.

Sollte das poröse Bauteil verschmutzt sein und/oder nicht mehr genügend gut durchgängig, ist es vorteilhaft, es auszutauschen - und daher ist es erfindungsgemäß austauschbar: Erfindungsgemäss ist die Anschlussvorrichtung von außen lösbar an der Fassfolgeplatte-Vorrichtung befestigt. Vorzugsweise ist das poröse Bauteil, allein oder als Teil einer Baugruppe, auswechselbar in der Anschlussvorrichtung integriert. Besonders bevorzugt ist das poröse Bauteil ein kreisscheibenförmiges Element aus einem offenporig porösen Material, und zwar besonders bevorzugt aus Metapor^{®} verschiedener Porösität. Von außen austauschbar oder auswechselbar bedeutet dabei insbesondere von der Außenseite der Vorrichtung und insbesondere auch, ohne dazu die Folgeplatte und/oder andere Elemente, die die Flüssigkeit im Behälter abdecken und/oder berühren, demontieren und/oder aus dem Behälter 4 entfernen zu müssen.

Für das poröse Bauteil hat sich - in Abhängigkeit von der Viskosität und der Phasenstabilität des abzudichtenden Materials - ein in mittlerer Porendurchmesser zwischen 0,0001 und 1 mm bewährt. So ist für ein Material mit einer Viskosität ungefähr wie Wasser (oder für ein höherviskoses, aber phaseninstabiles Material, welches bei dem Evakuierungsunterdruck eine Phase mit einer Viskosität ungefähr wie Wasser abscheidet) ein mittlerer Porendurchmesser zwischen ca. 0,001 und 0,01 mm geeignet, während ein mittlerer Porendurchmesser zwischen 0,1 und 1 mm für das Abdichten einer pastösen Flüssigkeit mit einer Viskosität zwischen 50.000 und 200.000 mPas vorteilhaft ist wie zum Beispiel Raku-Tool^{®} CP-6070 der Firma Rampf Tooling oder eines ähnlichen Materials anderer Hersteller.

Durch die gleiche erfindungsgemäße Fassfolgeplatte-Vorrichtung kann beim Herausfahren (mittels eines zum Beispiel hydraulischen, pneumatischen oder elektrischen Aktuators) der vorzugsweise senkrecht linear geführten Fassfolgeplatte-Vorrichtung aus dem Behälter (zum Beispiel zum Tausch eines leeren Fasses gegen ein volles) auch die Luft eingebracht oder eingeblasen werden, damit kein Unterdruck durch das Herausfahren der Fassfolgeplatte die Demontage behindert. Zumindest denkbar ist auch ein aktiv "pneumatisches" Herausfahren der Vorrichtung, indem Luft unter die Vorrichtung gepumpt und die Vorrichtung so aus dem Behälter heraus gedrückt wird - sowie besonders bevorzugt die Kombination aus aktivem Herausfahren mittels Aktuator und Drucklufteintrag unter die Folgeplatte. Jedenfalls wird dann beim Einbringen zudem vorteilhafterweise die möglicherweise (beim letzten Absaugen der Luft) in das poröse Bauteil eingebrachte Flüssigkeit wieder in den Behälter zurück geblasen, wodurch die dadurch soweit vielleicht beeinträchtigte Funktion des porösen Bauteils wieder hergestellt (oder zumindest wieder hinreichend verbessert) werden kann - und so der Austausch des porösen Bauteils durch eine neue als Ersatzteil verzögert werden kann.

Die Erfindung gemeinsam mit darauf eingerichteter Steuerung kann dafür sorgen, dass vollautomatisches Ein- und Ausfahren der Fassfolgeplatte zu einem sicheren und problemlosen Standardprozess wird, welcher zudem Kosten spart, weil kein Material verloren geht. Fasswechsel insbesondere auch der verbreiteten zylindrischen Spannring-Deckelfässer mit pastösen Materialien zum Beispiel beim industriellen Mischprozess von zwei- oder mehrkomponentigem Kunststoff können ohne Materialverlust und mit wesentlich erhöhter Sicherheit auch für den Dosierprozess durchgeführt werden.

Diese und weitere Vorteile und Merkmale der Erfindung werden anhand der folgenden Abbildungen eines Ausführungsbeispiels der Erfindung weiter beschrieben. Darin zeigen
- Fig. 1: nach dem Stand der Technik eine geschnittene Seitenansicht einer Fassfolgeplatte mit Anschlussvorrichtung für eine Vakuumleitung,
- Fig. 2: nach dem Stand der Technik die Anschlussvorrichtung als Ausschnitt aus Figur 1
- Fig. 3: gemäß der Erfindung eine geschnittene Seitenansicht einer Fassfolgeplatte mit Anschlussvorrichtung für eine Vakuumleitung und
- Fig. 4: nach dem Stand der Technik die Anschlussvorrichtung als Ausschnitt aus Figur 3.

Die abgebildeten Vorrichtungen 2, 2' dienen dem Abdichten sowie dem Absaugen von Luft aus einem Behälter 4, der eine zylindrische Innenkontur aufweist und eine insbesondere pastöse Flüssigkeit 6 enthält.

Die erfindungsgemäße Vorrichtung weist eine Dichtung 8 auf, die auf einem Umfang der Vorrichtung 2 angeordnet und angepasst ist, in die kreiszylindrische Innenkontur eines Behälters 4 umfänglich dichtend einsetzbar zu sein. Die Dichtung 8 der erfindungsgemäßen Vorrichtung grenzt eine Außenseite 10 der Vorrichtung 2 von einer Innenseite 12 der Vorrichtung ab.

An der Außenseite 10 der Vorrichtung 2 ist eine Anschlussvorrichtung 14', 14 angeordnet, die auf das Anschließen einer Vakuumpumpe 16 (nur schematisch als Symbol abgebildet) eingerichtet ist: An die Anschlussvorrichtung 14', 14 lässt sich eine Leitung 18 (nur schematisch als Linie abgebildet) anschließen, die dann mit einer Vakuumpumpe 16 in Leitungsverbindung steht.

In die Anschlussvorrichtung 14', 14 ist eine Durchleitung 20, 20' (entlang der Mittellinie 20, 20') integriert, die von der Innenseite zur Außenseite der Fassfolgeplatte-Vorrichtung führt.

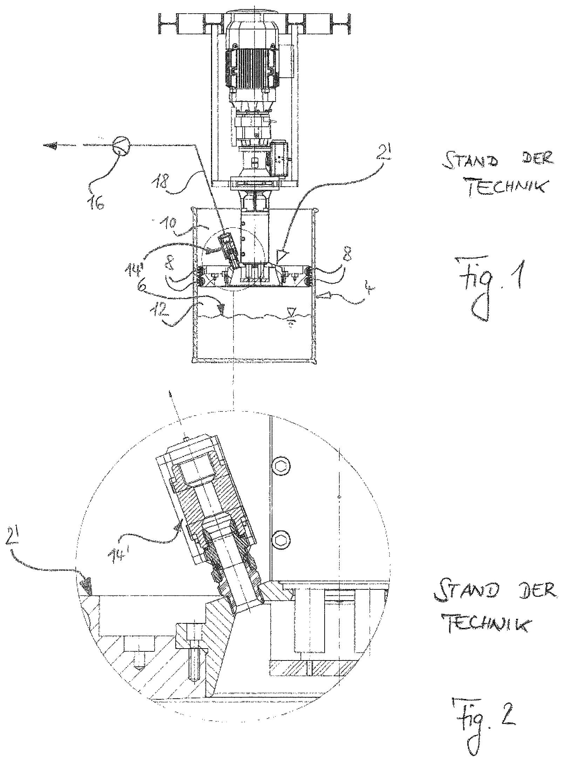

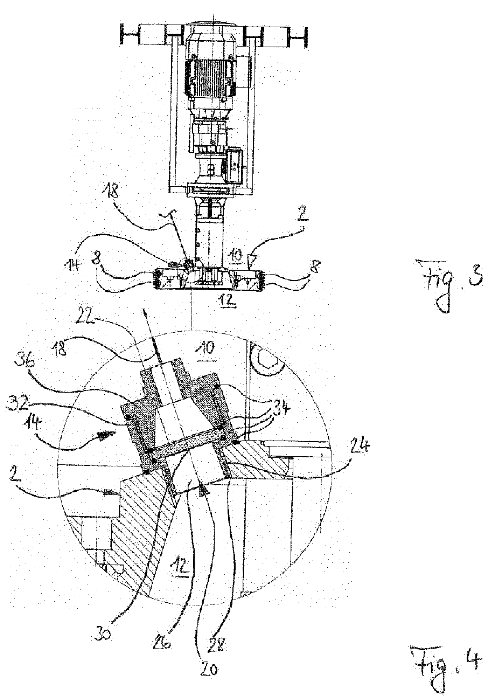

In die Anschlussvorrichtung 14 gemäß der Erfindung (Fig. 3 und 4) ist zudem ein auswechselbares, offenporig poröses Bauteil 22 integriert, durch das die Durchleitung 20 hindurchführt. Das poröse Bauteil 22 lässt mittels der Vakuumpumpe 16 abgesaugte Luft hindurch, während es für die pastöse Flüssigkeit 6 im Behälter eine Art Labyrinthdichtung darstellt (in Figur 3 und 4 sind Behälter 4, Flüssigkeit 6 und Vakuumpumpe 16 nicht dargestellt, jedoch in gleicher Weise um die erfindungsgemäße Vorrichtung 2 in Figur 3 und 4 angeordnet, wie in Figur 1 und 2 um die Vorrichtung 2' nach dem Stand der Technik) .

Mittels der Erfindung wird beim Aufsetzen der Fassfolgeplatte 2 auf den Behälter 4 direkt durch die Fassfolgeplatte 2 hindurch die Luft im Behälter 4 über der Flüssigkeitsoberfläche abgesaugt, wobei die Vakuumentlüftung durch das auswechselbare, offenporig poröse Bauteil 22 hindurch den bisherigen (immer mit Materialverlust verbundenen) Materialaustrag überflüssig macht, der bei der herkömmlichen Entlüftung mittels Kugelhahn 14` als Kontrollphänomen regelrecht nötig war (nur durch Materialaustritt aus der Anschlussvorrichtung 14' nach dem Stand der Technik wurde bei Absaugen an der höchsten Stelle der Fassfolgeplatte erkennbar, dass sämtliche Luft oberhalb der Flüssigkeitsoberfläche 6 abgesaugt war). Mittels der Vakuumpumpe 16 nämlich wird die Luft durch das auswechselbare, offenporig poröse Bauteil 22 hindurch abgesaugt, welche jedoch (wegen geringer Porengröße, aber auch wegen der "labyrinthischen" Beschaffenheit des offenporig porösen Materials 22) das pastöse Material 6 kaum eindringen lässt. Die Fassfolgeplatte 2 kann nun mittels der Erfindung, unter Vakuum, gesteuert und langsam abgesenkt werden, um schließlich auf die Flüssigkeitsoberfläche 6 aufzusetzen. Dies erfolgt erfindungsgemäß, ohne dass beim Aufsetzen der Folgeplatte 2 durch die Anschlussvorrichtung 16 der Vakuumleitung 18 Material 6 auf die Außenseite 10 gelangt und dort Menschen und Vorrichtungen gefährdet wie beim Kugelhahn 14` gemäß dem Stand der Technik (Figur 1 und 2) - nämlich wegen der Labyrinthdichtungsfunktion des porösen Bauteils 22.

Dass dann der Raum über der Flüssigkeit 6 vollständig evakuiert ist und die Folgeplatte 2 vollständig auf der Flüssigkeit 6 aufliegt, ist erfindungsgemäß steuerungs- oder regelungstechnisch gut darstellbar, weil dann, wenn die Luft abgesaugt ist und nun Flüssigkeit 6 von der Innenseite des Behälters 4 gegen das poröse Bauteil 22 gesaugt wird, der Saugdruck schlagartig ansteigt.

Die Durchleitung 20 ist an der höchsten Stelle der Innenseite der Folgeplatte 2 (in deren bestimmungsgemäßer Orientierung wie abgebildet eingesetzt in ein senkrecht stehendes Fass 4 mit also senkrechter Achse des Behälters) angeordnet.

Sollte das poröse Bauteil 22 verschmutzt sein und/oder nicht mehr genügend gut durchgängig, ist es auszutauschen - und daher wie abgebildet austauschbar - nämlich von außen (von der Außenseite 10), insbesondere also, ohne die Folgeplatte aus dem Behälter 4 demontieren zu müssen: Die Anschlussvorrichtung 14 insgesamt ist von außen lösbar an der Fassfolgeplatte-Vorrichtung 2 befestigt (Fig. 4), indem sie (mittels eines Außengewindes 24)zunächst teilweise in Form einer Hülse 26 in eine Durchgangsbohrung mit Innengewinde 28 (in das von der Außenseite 10 ein Außengewinde eingeschraubt werden kann) von außen einschraubbar (und gemäß Abbildungen eingeschraubt) ist. Das poröse Bauteil 22 wiederum ist dann auswechselbar in der Anschlussvorrichtung 14 (integrierbar und gemäß Abbildungen integriert), nämlich als flaches, insbesondere scheibenförmiges, insbesondere kreisscheibenförmiges Element 22, ausschließlich aus offenporig porösem Material 22, das von der Außenseite 10 den Ausgang 30 der Hülse 26 überdeckend (insbesondere koaxial) auf den Ausgang 30 der Hülse 26 aufsetzbar (und gemäß Abbildungen aufgesetzt) ist. Die abgebildete Ausgestaltung zeigt, wie es in einem Gewindeflansch 32 der Hülse 26 der Anschlussvorrichtung 14 zentriert und/oder mittels Dichtungen 34 gedichtet in den Hülsenausgang 30 einsetzbar (und gemäß Abbildungen eingesetzt) ist. Eine Konterhülse 36 ist dann (sozusagen zur Vervollständigung der Anschlussvorrichtung 14 und insbesondere wiederum mittels Dichtungen 34 gedichtet) von der Außenseite 10 in den Gewindeflansch 32 gegen das offenporig poröse Element 22 schraubbar (und gemäß Abbildungen geschraubt), um es insgesamt in der Anschlussvorrichtung 14 festzusetzen und zu befestigen.

### Bezugszeichenliste

Fassfolgeplatte-Vorrichtungen 2, 2` ( ' bedeutet "nach dem Stand der Technik")
Behälter 4
pastöse Flüssigkeit 6
Dichtung 8
Außenseite 10 der Fassfolgeplatte-Vorrichtung 2
Innenseite 12 der Fassfolgeplatte-Vorrichtung 2
Anschlussvorrichtung 14, 14'
Vakuumpumpe 16
Leitung 18 (nur schematisch als Linie abgebildet)
Durchleitung 20, 20' (entlang der Mittellinie 20, 20')
offenporig poröses Bauteil 22
Außengewinde 24
Hülse 26
Durchgangsbohrung mit Innengewinde 28
Ausgang 30 der Hülse 26
Gewindeflansch 32
Dichtungen 34
Konterhülse 36

## Patentansprüche

1. Fassfolgeplatte-Vorrichtung
- zum Abdichten und Evakuieren eines Behälters (4), der eine zylindrische, geradzylindrische oder kreiszylindrische Innenkontur aufweist und eine insbesondere pastöse Flüssigkeit (6) enthält,
- mit einer Dichtung (8), die auf einem Umfang der Vorrichtung (2) angeordnet und angepasst ist, in die zylindrische Innenkontur des Behälters umfänglich dichtend einsetzbar zu sein, und die eine Außenseite (10) der Vorrichtung (2) von einer Innenseite (12) der Vorrichtung (2) abgrenzt, und
- mit einer Durchleitung (20) von der Innenseite zur Außenseite der Fassfolgeplatte-Vorrichtung, die an der Außenseite (10) zum Anschließen einer weiter zu einer Evakuierungspumpe (16) führenden Leitungsverbindung (18) eingerichtet ist,
**gekennzeichnet durch**
- ein von der Außenseite auswechselbares, offenporig poröses Bauteil (22), durch das die Durchleitung (20) hindurchführt.

2. Vorrichtung nach einem der vorhergehenden Ansprüche, **gekennzeichnet durch** eine Anschlussvorrichtung (14), durch die die Durchleitung (20) an der Außenseite (10) eingerichtet ist zum Anschließen einer weiter zur Evakuierungspumpe (16) führenden Leitungsverbindung (18), in die mindestens der zur Außenseite führende Endabschnitt der Durchleitung (20) sowie das poröse Bauteil (22) auswechselbar integriert ist.

3. Vorrichtung nach Anspruch 2, **dadurch gekennzeichnet, dass** die Anschlussvorrichtung (14) von außen (10) lösbar an der Fassfolgeplatte-Vorrichtung befestigt ist.

4. Vorrichtung nach einem der vorhergehenden Ansprüche, **dadurch gekennzeichnet, dass** das poröse Bauteil (22), allein oder als Teil einer Baugruppe (14), auswechselbar ist.

5. Vorrichtung nach einem der vorhergehenden Ansprüche, **dadurch gekennzeichnet, dass** das poröse Bauteil (22) einen mittleren Porendurchmesser zwischen 0,0001 und 1 mm aufweist.

6. Vorrichtung nach einem der vorhergehenden Ansprüche, **dadurch gekennzeichnet, dass** das poröse Bauteil (22) einen mittleren Porendurchmesser zwischen 0,1 und 1 mm für das Abdichten einer hochgradig pastösen Flüssigkeit mit einer Viskosität zwischen 50.000 und 5.000.000 mPas aufweist.

7. Vorrichtung nach einem der vorhergehenden Ansprüche, **dadurch gekennzeichnet, dass** das poröse Bauteil (22) aus Aluminiumgranulat-Epoxyharz-Verbundwerkstoff besteht.

## Claims

1. Follower plate device
- for sealing and evacuating a container (4) which has a cylindrical, straight cylindrical or circular cylindrical inner contour and contains an in particular pasty fluid (6),
- comprising a seal (8) which is arranged on a periphery of the device (2) and is adjusted so as to be insertable into the cylindrical inner contour of the container, in a peripherally sealing manner, and which delimits an outer side (10) of the device (2) from an inner side (12) of the device (2), and
- comprising a passage (20) from the inner side to the outer side of the follower plate device, which is designed on the outer side (10) for connection of a further line connection (18) leading to an evacuation pump (16),
**characterised by**
- an exchangeable, open-pored porous component (22) which is guided through the passage (20) from the outer side.

2. Device according to any of the preceding claims, **characterised by** a connection device (14), via which the passage (20) on the outer side (10) is designed for connecting a further line connection (18) which leads to the evacuation pump (16) and into which at least the end portion of the passage (20) leading to the outer side, and the porous component (22), is integrated in an exchangeable manner.

3. Device according to claim 2, **characterised in that** the connection device (14) is fastened to the follower plate device so as to be detachable from the outer side (10).

4. Device according to any of the preceding claims, **characterised in that** the porous component (22) is exchangeable alone or as part of an assembly (14).

5. Device according to any of the preceding claims, **characterised in that** the porous component (22) has an average pore diameter of between 0.0001 and 1 mm.

6. Device according to any of the preceding claims, **characterised in that** the porous component (22) has an average pore diameter of between 0.1 and 1 mm for sealing a high-quality pasty fluid having a viscosity of between 50,000 and 5,000,000 mPas.

7. Device according to any of the preceding claims, **characterised in that** the porous component (22) consists of aluminium granulate epoxy resin composite material.

## Revendications

1. Dispositif à plaque suiveuse de fût
- destiné à étanchéifier et à mettre sous vie un contenant (4), qui présente un contour intérieur cylindrique, cylindrique droit ou cylindrique circulaire et qui contient un liquide (6) en particulier pâteux,
- avec un joint d'étanchéité (8), qui est disposé sur une périphérie du dispositif (2) et qui est adapté pour pouvoir être inséré dans le contour intérieur cylindrique du contenant tout en assurant une étanchéité en périphérie, et qui délimite un côté extérieur (10) du dispositif (2) d'un côté intérieur (12) du dispositif (2), et
- avec un conduit de passage (20) depuis le coté intérieur vers le côté extérieur du dispositif à plaque suiveuse de fût, qui est installé sur le côté supérieur (10) pour le raccordement d'un raccord de conduit (18) menant par ailleurs à une pompe de mise sous vide (16),
**caractérisé par**
- un composant (22) poreux à pores ouverts interchangeable depuis le côté extérieur, à travers lequel le conduit de passage (20) mène de part en part.

2. Dispositif selon la revendication précédente, **caractérisé par** un dispositif de raccordement (14), par lequel le conduit de passage (20) est installé sur le côté extérieur (10) pour le raccordement d'un raccord de conduit (18) menant par ailleurs à la pompe de mise sous vide (16), dans lequel sont intégrés de manière interchangeable au moins la section d'extrémité menant au côté extérieur du conduit de passage (20) ainsi que le composant poreux (22) .

3. Dispositif selon la revendication 2, **caractérisé en ce que** le dispositif de raccordement (14) est fixé de manière amovible depuis l'extérieur (10) sur le dispositif à plaque suiveuse de fût.

4. Dispositif selon l'une quelconque des revendications précédentes, **caractérisé en ce que** le composant poreux (22) est interchangeable seul ou en tant que partie d'un module (14).

5. Dispositif selon l'une quelconque des revendications précédentes, **caractérisé en ce que** le composant poreux (22) présente un diamètre de pores moyen entre 0,0001 et 1 mm.

6. Dispositif selon l'une quelconque des revendications précédentes, **caractérisé en ce que** le composant poreux (22) présente un diamètre de pores moyen entre 0,1 et 1 mm pour l'étanchéification d'un liquide fortement pâteux avec une viscosité entre 50 000 et 5 000 000 mPas.

7. Dispositif selon l'une quelconque des revendications précédentes, **caractérisé en ce que** le composant poreux (22) est constitué d'un matériau composite à base de granulé d'aluminium- de résine époxy.
